# EUROPEAN PATENT SPECIFICATION

(11) **EP 3 753 657 B1**
(45) Date of publication and mention of the grant of the patent: **13.03.2024**
(21) Application number: 20181223.7
(22) Date of filing: 19.06.2020
(51) Int. Cl.: B23B 31/20, B23B 31/40

(54) **MANDREL WITH A DEVICE FOR REDUCING THE CLOSING FORCE EXERTED BY THE MACHINE TOOL ON WHICH THE MANDREL IS MOUNTED**
SPINDEL MIT EINER VORRICHTUNG ZUR REDUZIERUNG DER SCHLIESSKRAFT EINER WERKZEUGMASCHINE AN WELCHER DIE SPINDEL ANGEBRACHT IST
MANDRIN AVEC DISPOSITIF POUR REDUIRE LA FORCE DE FERMETURE D'UNE MACHINE AUQUELLE LE MANDRIN EST MONTÉ

(30) Priority: 21.06.2019 IT 201900009705
(43) Date of publication of application: 23.12.2020
(73) Proprietor: Unilock Di Umberto Crosti E C. S.A.S., 20090 Trezzano sul Naviglio (MI) (IT)
(72) Inventor: Crosti, Umberto, 20090 Trezzano sul Naviglio MI (IT)
(74) Representative: Perani & Partners S.p.A.

(56) References cited:
- EP-A1- 0 134 988
- EP-A1- 1 101 554
- DE-A1- 3 233 868
- DE-A1-102016 125 269
- JP-A- S52 156 477
- US-A1- 2017 304 907

## Description

### Technical field

The present invention relates to a mandrel with a device for reducing the jaws closing force exerted by a machine tool on which the mandrel is mounted as defined in the preamble of claim 1.

### Background art

As known, the closing force of the jaws of a mandrel is provided by the hydraulic system of a machine tool, such as a lathe or a machining center, on which the mandrel is mounted to hold a workpiece to be machined by tools.

The closing force reaches the jaws of the mandrel by mechanical transmission of an axial force generated by the piston of a hydraulic cylinder and conventionally converted into radial forces by the jaws of the mandrel.

In lathe machining of thin or easily deformable workpieces, when the latter are held by the hydraulic clamping system of the mandrel, they undergo surface deformation, which prevent achievement of proper machining results.

For example, EP 0 134 988 A1 discloses a mandrel according to the preamble of claim 1, comprising a series of gripping elements arranged circumferentially at a tubular bell-shaped element. The tubular bell-shaped element slides in a longitudinal direction and actuates the gripping elements, which grip a workpiece as they slide in a radial direction.

### Problem of the prior art

Therefore, a problem arises as to how to limit the force on the jaws of a mandrel to a value that is sufficient to ensure immobilization of the workpiece for machining, but also avoids deformation thereof due to excessive squeezing between the jaws, considering the high variability of the shapes of the workpieces and the fact that the hydraulic pressure developed by the machine tool plenum should remain unchanged.

### Object of the present invention

Therefore, the object of the present invention is to solve the aforementioned problem by providing a mandrel with a device for reducing the closing force exerted by the machine tool on which the mandrel is mountable, in accordance with claim 1 below.

### Advantages of the present invention

The present invention provides a mandrel having reduction members and adjustment means for adapting the closing force of the jaws of a mandrel to a value that affords the clamping of a delicate or deformation-sensitive workpiece, during machining, keeping the amount of closing force exerted upstream by the plenum of the machine tool on which the mandrel is mounted remains unaltered.

### BIEF DESCRIPTION OF THE DRAWINGS

The invention will be now described in greater detail with reference to one embodiment thereof given by way of illustration and without limitation and shown in the annexed drawings in which:
- Figure 1 shows a perspective view of the exterior of the mandrel, in a particular embodiment in which the workpiece is clamped on the exterior for possible machining of workpiece cavities;
- Figure 2 shows a cross-sectional view, as taken along the line A-A of Figure 1, with the sleeve pusher at the end of both the compression stroke of the springs of the reduction member and the closing stroke of the jaws on the workpiece;
- Figure 3 shows an exploded perspective view of the mandrel embodiment of Figures 1 and 2;
- Figure 4 shows a perspective view of the exterior of the mandrel, in an embodiment in which the workpiece is clamped in a cavity thereof, for possible machining of the exterior surface of the workpiece, the embodiment of Figure 4 is not part of the present invention;
- Figure 5 shows a cross-sectional view, as taken along the line B- B, with the sleeve pusher at the end of both the compression stroke of the springs of the reduction member and the closing stroke of the gripping jaws inside of the workpiece, the embodiment of figure 5 is not part of the present invention;
- Figures 6 and 7 show exploded perspective views of the mandrel embodiment of Figure 5 which is not part of the present invention.

### DETAILED DESCRIPTION

Referring to the above-mentioned drawings, the body of the mandrel has been referenced 1.

It is fixed by conventional screw members 2 to the front of the machine tool, not shown, via a connection plate 3.

A pusher member 4 acting as an interface between the machine tool and the mandrel is connected with a first end 5 to the operating end of a conventional cylinder-piston assembly, not shown, which is designed to operate the machine tool.

Such interface pusher 4 is housed in the front of the machine tool and axially extends from said first end 5, configured to be connected to the operating end of the hydraulic cylinder of the machine tool, to a second end 6 which is axially opposite to the first end and is located in the body 1 of the mandrel, passing through an axial opening 101.

Said second end 6 of the interface pusher 4 is configured to have a first front portion 7 designed to axially engage with the edge 108 of a sleeve pusher 8 having the function of actuating the jaws 9 for clamping the workpiece 10 to be inserted into the same jaw.

The second end 6 is also configured with a second front portion 12 facing a plurality of elastically deformable elements 13.

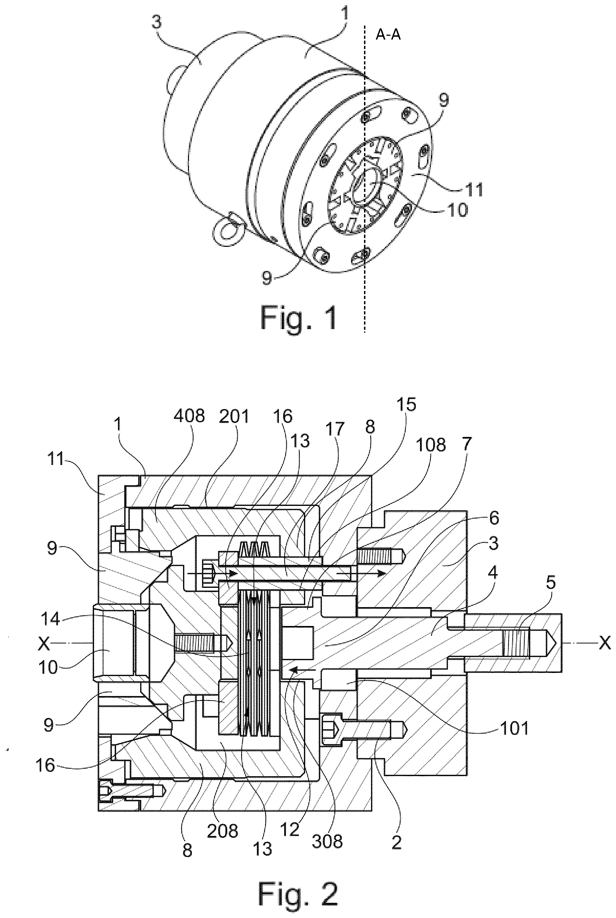

As shown in Figure 2, the second front portion (12) is configured to contact a spacer interposed between the second front portion (12) and the plurality of elastically deformable elements (14). The second front portion (12) contacting the spacer presses the plurality of elastically deformable elements (14).

Preferably, the elements 13 consist of cup springs forming packs 14, which are evenly arranged around the longitudinal axis X-X of the mandrel and each supported by a respective column 15 fixed to a reference flange (abutment plate) 16, by means of screws 17.

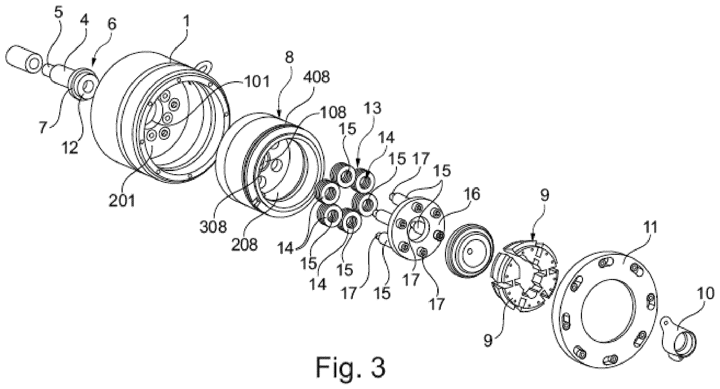

In the example of Figure 3, there are six packs of cup springs.

However, there may be more or less or even only one of them.

The columns 15 extend from the reference flange 16, against which the packs of springs 14 abut, and the body 1 of the mandrel where they are fixed by means of the screws 17.

Alternatively, the elastically deformable elements 13 may consist of helical springs or also bearings made of elastomeric materials or may be replaced by other equivalent devices.

The mandrel as shown in Figures 2 and 3, the packs of cup springs 14, with the reference flange 16, are housed within the cavity 208 of the sleeve pusher 8 for actuating the jaws 9.

In the same cavity 208 penetrates also the second front portion 12 of the interface pusher 4 which passes through an opening 308 of the same sleeve pusher 8, the latter being in turn slidably housed, with its bell part 408, within the cavity 201 of the body 1 of the mandrel.

During operation, the sleeve pusher 8, pushed by the interface pusher 4, presses the packs of cup springs or, more generally, the elastically deformable elements 13, until a predetermined elastic deformation is generated thereon, whose reaction is discharged via the columns 15, on the reference flange 16 in turn connected to the body 1 of the mandrel via the screws 17 and thence directly on the structure of the machine tool without affecting the closure of the clamping jaws 9 in any manner.

Only when the spring pack 14 reaches the determined elastic deformation, to discharge a given energy exceeding the one that is strictly necessary to grip the workpiece without deforming or damaging it, the first front portion 7 of the second end of the interface pusher 4, comes to engagement with the edge 108 of the sleeve pusher 8 for actuating the clamping jaws 9, whereby any further displacement of the interface pusher 4 causes said jaws 9 to close with a force which discharges with a reduced value into the workpiece 10 clamped between such jaws 9 of the mandrel.

The remaining force may be adjusted and controlled manually using the manometer of the machine.

The technical solution described concerning the OD clamping mandrel also applies to expanding or ID clamping mandrel.

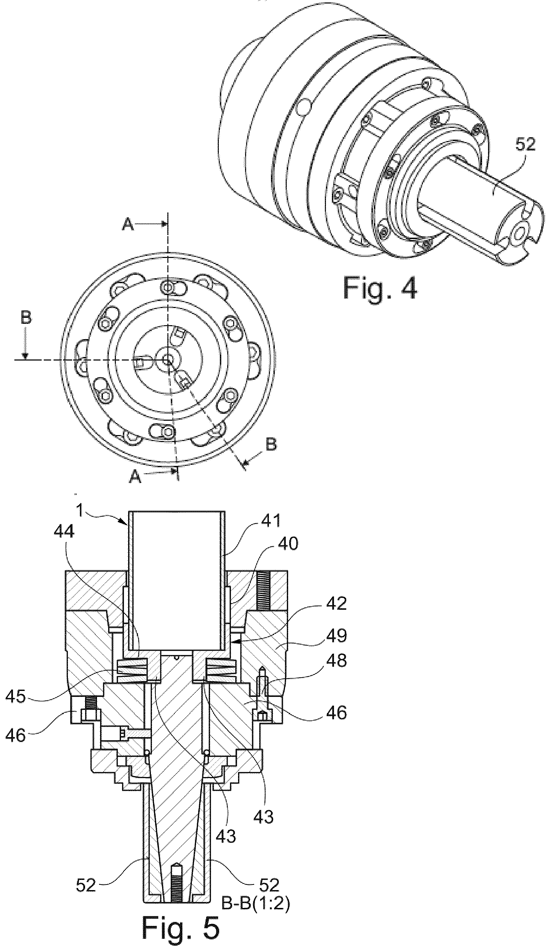

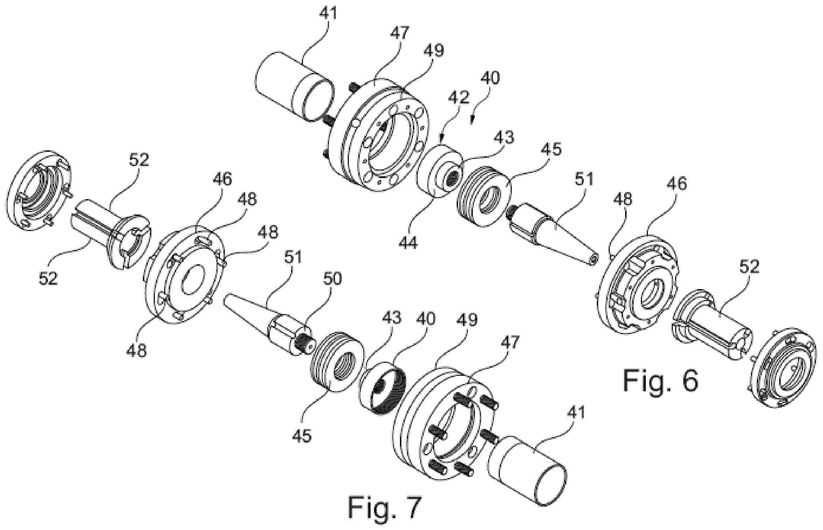

That is, referring now to Figures 4, 5, 6 and 7, the structure of the mandrel with a force-reducing device formed to clamp the workpiece in a cavity thereof for exterior machining, comprises an interface pusher 40 whose first axial end is configured for connection to the conduit 41, for hydraulic supply of the machine tool, not shown in the drawings as a whole.

Said conduit 41 actually consists of the pipe of the hydraulic plenum of the machine tool.

The opposite axial end 42 has a first front portion 43 and a second front portion 44 which faces an elastically deformable element 45.

In the embodiment of the drawings, this elastically deformable element 45 consists of a pack of cup springs which is compressed, during the closing operation of the mandrel, to a given value of elastic deformation of said second portion 44 of the end 42 of the interface pusher 40 against the body 46, in the form of a plate, which discharges the elastic reaction on the front 47of the machine tool by means of a stud connection 48 and an intermediate element 49 that forms the base of the mandrel.

Only when reaching the elastic deformation determined for the spring pack 45, to discharge a given energy exceeding the one that is strictly necessary to grip the piece without deforming or damaging it, the first front portion 43 of the second end 42 of the interface pusher 40 engages the abutment 50 of the cone 51 for actuating the jaws 52.

As a result, any further displacement of the interface pusher 40 causes the aforementioned jaws to close with a force of reduced value, which prevents damage to the workpiece.

## Claims

1. A mandrel comprising a device for reducing the closing force exerted by the operating end of a hydraulic cylinder of a machine tool on which the mandrel is mountable, the mandrel comprising:
- a mandrel body (1), adapted to be connected to a front of the machine tool,
- an interface pusher (4), adapted to be housed in the front of the machine tool and axially extending from a first end (5), configured to be connected to the operating end of the hydraulic cylinder of the machine tool and to a second end (6), which is axially opposite to the first end and is located in the body (1) of the mandrel,
- jaws (9) for clamping a workpiece to be mounted to the mandrel, and a sleeve pusher (8) for actuating the jaws (9),
said second end (6) of the interface pusher (4) comprising a first front portion (7) configured to control the sleeve pusher (8) for actuating the jaws (9), and a second front portion (12) facing a plurality of elastically deformable elements (14), said elastically deformable elements (14) being housed within an axial cavity (208) of said sleeve pusher (8) for actuating the jaws (9), **characterized in that**
the mandrel further comprises a spacer interposed between the second front portion and the plurality of elastically deformable elements, wherein the second front portion is configured to contact the spacer; and **in that**
said elastically deformable elements are adapted to be compressed between said second front portion (12) of the interface pusher(4) and an axial reference (17) rigidly connected to said mandrel body (1), wherein said first front portion (7) of the interface pusher (4) is configured to engage said sleeve pusher (8) for actuating the jaws (9) as a predetermined elastic deformation value is reached in said elastically deformable elements (14).

2. A mandrel as claimed in claim 1, **characterized in that** said elastically deformable elements consist of packs of cup springs.

3. A mandrel as claimed in claims 1 and 2, **characterized in that** said packs of cup springs (14) are axially supported by a plurality of columns (15) circumferentially arranged about the longitudinal axis of the mandrel, and connecting an abutment plate (16), on which the packs (14) of the springs rest, to the mandrel body (1), said columns (15) being able to discharge the elastic reaction determined by the compression produced by said second portion (12) of the end of the interface pusher (4) on said mandrel body (1).

4. A mandrel as claimed in claim 3, **characterized in that** said columns (15) extend through said cup springs (14) of said elastic element and are adapted to allow the cup springs to axially slide relatively to said columns.

5. A mandrel as claimed in any of claims 1 to 3, wherein said sleeve pusher (8) for actuating the jaws (9) for clamping the workpiece (10) to be mounted on the mandrel (1) is configured to actuate jaws (9) adapted to clamp the workpiece being machined holding it from outside.

6. A mandrel as claimed in any of claims 1 to 3, wherein said sleeve pusher (8) for actuating the jaws for clamping the workpiece to be mounted on the mandrel is configured to actuate the jaws to expand, wherein the jaws are adapted to lock the workpiece to be machined by holding it from inside of a cavity thereof.

## Patentansprüche

1. Dorn, der eine Vorrichtung zum Reduzieren der Schließkraft, die durch das Arbeitsende eines Hydraulikzylinders einer Werkzeugmaschine ausgeübt wird, auf der der Dorn montierbar ist, umfasst, wobei der Dorn umfasst:
- einen Dornkörper (1), der dazu angepasst ist, mit einer Vorderseite der Werkzeugmaschine verbunden zu sein,
- einen Schnittstellenschieber (4), der dazu angepasst ist, in der Vorderseite der Werkzeugmaschine untergebracht zu sein und sich axial von einem ersten Ende (5) erstreckt, das dazu konfiguriert ist, mit dem Arbeitsende des Hydraulikzylinders der Werkzeugmaschine und mit einem zweiten Ende (6) verbunden zu sein, das dem ersten Ende axial entgegengesetzt ist und sich in dem Körper (1) des Dorns befindet,
- Spannbacken (9) zum Spannen eines Werkstücks, das an dem Dorn montiert werden soll, und
einen Hülsenschieber (8) zum Betätigen der Spannbacken (9),
wobei das zweite Ende (6) des Schnittstellenschiebers (4) einen ersten vorderen Abschnitt (7) umfasst, der dazu konfiguriert ist, den Hülsenschieber (8) zum Betätigen der Spannbacken (9) zu steuern, und einen zweiten vorderen Abschnitt (12), der einer Vielzahl von elastisch verformbaren Elementen (14) zugewandt ist, wobei die elastisch verformbaren Elemente (14) in einem axialen Hohlraum (208) des Hülsenschiebers (8) zum Betätigen der Spannbacken (9) untergebracht sind, **dadurch gekennzeichnet, dass** der Dorn ferner einen Abstandshalter umfasst, der zwischen dem zweiten vorderen Abschnitt und der Vielzahl von elastisch verformbaren Elementen angeordnet ist, wobei der zweite vordere Abschnitt dazu konfiguriert ist, den Abstandshalter zu berühren; und dass die elastisch verformbaren Elemente dazu angepasst sind, zwischen dem zweiten vorderen Abschnitt (12) des Schnittstellenschiebers (4) und einer axialen Referenz (17), die starr mit dem Dornkörper (1) verbunden ist, komprimiert zu werden, wobei der erste vordere Abschnitt (7) des Schnittstellenschiebers (4) dazu konfiguriert ist, mit dem Hülsenschieber (8) in Eingriff zu treten, um die Spannbacken (9) zu betätigen, während ein vorbestimmter elastischer Verformungswert in den elastisch verformbaren Elementen (14) erreicht wird.

2. Dorn nach Anspruch 1, **dadurch gekennzeichnet, dass** die elastisch verformbaren Elemente aus Tellerfederpaketen bestehen.

3. Dorn nach den Ansprüchen 1 und 2, **dadurch gekennzeichnet, dass** die Pakete von Tellerfedern (14) axial von einer Vielzahl von Säulen (15) getragen werden, die in Umfangsrichtung um die Längsachse des Dorns eingerichtet sind und eine Anschlagplatte (16), auf der die Pakete (14) der Federn ruhen, mit dem Dornkörper (1) verbinden, wobei die Säulen (15) in der Lage sind, die elastische Reaktion abzugeben, die durch die durch den zweiten Abschnitt (12) des Endes des Schnittstellenschiebers (4) auf dem Dornkörper (1) erzeugte Kompression bestimmt ist.

4. Dorn nach Anspruch 3, **dadurch gekennzeichnet, dass** sich die Säulen (15) durch die Tellerfedern (14) des elastischen Elements erstrecken und dazu angepasst sind, es den Tellerfedern zu erlauben, relativ zu den Säulen axial zu gleiten.

5. Dorn nach einem der Ansprüche 1 bis 3, wobei der Hülsenschieber (8) zum Betätigen der Spannbacken (9) zum Festklemmen des Werkstücks (10), das auf dem Dorn (1) montiert werden soll, konfiguriert ist, um Spannbacken (9) zu betätigen, die dazu angepasst sind, das bearbeitete Werkstück festzuklemmen und von außen zu halten.

6. Dorn nach einem der Ansprüche 1 bis 3, wobei der Hülsenschieber (8) zum Betätigen der Spannbacken zum Festklemmen des Werkstücks, das auf dem Dorn montiert werden soll, dazu konfiguriert ist, die Spannbacken zu betätigen, um sich auszudehnen, wobei die Spannbacken dazu angepasst sind, das zu bearbeitende Werkstück zu verriegeln, indem sie es von innerhalb eines Hohlraums davon halten.

## Revendications

1. Mandrin comprenant un dispositif pour réduire la force de fermeture exercée par l'extrémité fonctionnelle d'un vérin hydraulique d'une machine-outil sur laquelle le mandrin peut être monté, le mandrin comprenant :
- un corps de mandrin (1), apte à être relié à l'avant de la machine-outil,
- un poussoir d'interface (4), apte à être logé à l'avant de la machine-outil et s'étendant axialement à partir d'une première extrémité (5), configuré pour être relié à l'extrémité fonctionnelle du vérin hydraulique de la machine-outil et à une seconde extrémité (6), qui est axialement opposée à la première extrémité et est située dans le corps (1) du mandrin,
- des mâchoires (9) pour serrer une pièce à monter sur le mandrin, et
un poussoir de manchon (8) pour actionner les mâchoires (9),
ladite seconde extrémité (6) du poussoir d'interface (4) comprenant une première partie avant (7) configurée pour commander le poussoir de manchon (8) afin d'actionner les mâchoires (9), et une seconde partie avant (12) faisant face à une pluralité d'éléments élastiquement déformables (14), lesdits éléments élastiquement déformables (14) étant logés à l'intérieur d'une cavité axiale (208) dudit poussoir de manchon (8) pour actionner les mâchoires (9), **caractérisé en ce que** le mandrin comprend en outre une entretoise interposée entre la seconde partie avant et la pluralité d'éléments élastiquement déformables, dans lequel la seconde partie avant est configurée pour entrer en contact avec l'entretoise ; et **en ce que** lesdits éléments élastiquement déformables sont aptes à être comprimés entre ladite seconde partie avant (12) du poussoir d'interface (4) et une référence axiale (17) reliée rigidement audit corps de mandrin (1), dans lequel ladite première partie avant (7) du poussoir d'interface (4) est configurée pour se mettre en prise avec ledit poussoir de manchon (8) afin d'actionner les mâchoires (9) lorsqu'une valeur de déformation élastique prédéterminée est atteinte dans lesdits éléments élastiquement déformables (14).

2. Mandrin selon la revendication 1, **caractérisé en ce que** lesdits éléments élastiquement déformables sont constitués de paquets de rondelles Belleville.

3. Mandrin selon les revendications 1 et 2, **caractérisé en ce que** lesdits paquets de rondelles Belleville (14) sont supportés axialement par une pluralité de colonnes (15) agencées circonférentiellement autour de l'axe longitudinal du mandrin, et reliant une plaque de butée (16), sur laquelle les paquets (14) des rondelles reposent, au corps de mandrin (1), lesdites colonnes (15) étant capables de décharger la réaction élastique déterminée par la compression produite par ladite seconde partie (12) de l'extrémité du poussoir d'interface (4) sur ledit corps de mandrin (1).

4. Mandrin selon la revendication 3, **caractérisé en ce que** lesdites colonnes (15) s'étendent à travers lesdites rondelles Belleville (14) dudit élément élastique et sont aptes à permettre aux rondelles Belleville de coulisser axialement par rapport auxdites colonnes.

5. Mandrin selon l'une quelconque des revendications 1 à 3, dans lequel ledit poussoir de manchon (8) pour actionner les mâchoires (9) pour serrer la pièce (10) à monter sur le mandrin (1) est configuré pour actionner des mâchoires (9) aptes à serrer la pièce à usiner en la retenant de l'extérieur.

6. Mandrin selon l'une quelconque des revendications 1 à 3, dans lequel ledit poussoir de manchon (8) pour actionner les mâchoires pour serrer la pièce à monter sur le mandrin est configuré pour actionner les mâchoires afin qu'elles s'élargissent, dans lequel les mâchoires sont aptes à verrouiller la pièce à usiner en la retenant depuis l'intérieur d'une cavité de celles-ci.
